# EUROPEAN PATENT SPECIFICATION

(11) **EP 2 403 757 B1**
(45) Date of publication and mention of the grant of the patent: **16.04.2014**
(21) Application number: 10722158.2
(22) Date of filing: 05.03.2010
(51) Int. Cl.: B64C 13/16

(54) **UNMANNED AIR VEHICLE (UAV), CONTROL SYSTEM AND METHOD**
UNBEMANNTES LUFTFAHRZEUG (UAV), STEUERSYSTEM UND VERFAHREN
AVION SANS PILOTE (UAV), SYSTÈME ET PROCÉDÉ DE COMMANDE

(30) Priority: 05.03.2009 GB 0903812
(43) Date of publication of application: 11.01.2012
(73) Proprietor: Cranfield Aerospace Ltd, Cranfield, Bedforshire MK43 0AL (GB)
(72) Inventor: THOMASSON, Peter, Geoffrey, Bedfordshire MK43 0AL (GB); JONES, Robert, Idris, Bedfordshire MK43 0AL (GB); POLL, David, Ian, Alistair, Bedfordshire MK43 0AL (GB)
(74) Representative: Boden, Keith McMurray
(86) International application number: PCT/GB2010/000399
(87) International publication number: WO 2010/100436

(56) References cited:
- EP-A1- 1 674 819
- EP-A2- 1 982 914
- WO-A2-2005/123502
- DE-A1- 4 212 201
- US-A1- 2003 025 034

## Description

The present invention relates to an unmanned air vehicle (UAV), and a control system for and method of controlling the same.

The present invention aims to provide a robust UAV for imaging ground-level objects, in particular a lightweight UAV for low-level operation.

Such vehicles must be capable of conducting operations in adverse weather conditions, including strong winds and gusts.

For traditional, stable aircraft, where the center of gravity is ahead of the aerodynamic center, an encounter with a general wind gust will result in a rotational displacement of the vehicle in any or all of the three rotational axes of roll, pitch and yaw.

If an image sensor were fixed rigidly to the structure of such a traditional, stable aircraft, the pitching, rolling and yawing motions induced as the aircraft moves through wind gusts would be such that the sensor axis would be displaced for the point of interest, the ground-based object, and the image would shake as the aircraft is returned to its original orientation by virtue of its inherent stability. This could result in the loss of the image of the ground-based object or in an image which is shaking so much that it cannot be used by a ground-based operator.

In existing vehicles, this problem is solved by mounting the imaging image sensor in a complex gimbal system, which attempts to isolate the aiming and motion of the image sensor from the motion of the UAV.

This system, whilst effective, is mechanically complex, which is expensive, heavier and more susceptible to failure in use and during handling.

EP-A-1982914 discloses a propeller aircraft for carrying out tactical missions, having a front sided propeller for propulsion of the aircraft which is driven using a battery operated electric motor.

DE-A-4212201 discloses a reconnaissance aircraft with adaptive control of aerodynamic surfaces, with the aircraft comprising a fuselage and a wing assembly which is carried by the fuselage and is divided into two regions at selected distances from the centre of mass.

US-A-2003/0025034 discloses an airship system which has an airship, a base station and at least three measurement points.

WO-A-2005/123502 discloses a surveillance method and apparatus which comprises at least one unmanned aerial vehicle (UAV) which obtains images around a convoy's position to provide information about potential hostile activity while the UAV follows a generally curvilinear path around the convoy as instructed by one of the convoy vehicles.

EP-A-1674819 discloses a small flying body (drone), with an airframe, control device and a propeller electric drive.

The present invention provides object position determination and trajectory shaping to provide sensor guidance command, as opposed to airframe positional command.

Moreover, the present invention provides a sense-and-avoid capability through smart sensor integration, airframe agility and remote piloting. This sense-and-avoid capability should enable operation of an unmanned air vehicle in non-segregated airspace, particularly in the UK.

In one embodiment the present invention provides a gust-insensitive unmanned air vehicle (UAV) for imaging the ground, the UAV comprising: an airframe which is substantially neutrally stable and comprises a fuselage and at least three wings which include control surfaces, wherein the wings are arranged in symmetrical relation about the fuselage and confer the UAV with a roll stability about the longitudinal axis of the fuselage for any roll angle, thereby allowing the roll angle of the UAV to be set to any required angle independent of the heading and pitch angle of the UAV; a propulsion device for propelling the UAV in flight; an image sensor for imaging the ground, wherein the image sensor has a footprint, the position of which is determined by the roll angle of the UAV; and a flight control system for controlling the in-flight operation of the UAV, wherein the flight control system includes flight control sensors and is operative to render the UAV gust insensitive in response to inputs from the flight control sensors, whereby the UAV exhibits substantially only linear displacements in response to wind gusts, and control the roll angle of the UAV to determine the position of the sensor footprint.

The present invention also extends to an unmanned air vehicle (UAV) control system for imaging the ground, the UAV control system comprising: the above-described UAV, further comprising: a communications module for communicating with a ground station; and a ground station for controlling operation of the UAV, wherein the ground station comprises: a communications module for communicating with the UAV; and a ground control system for controlling operation of the UAV.

In a further embodiment the present invention provides a method of operating an unmanned air vehicle (UAV), the method comprising the steps of:
providing an unmanned air vehicle (UAV), wherein the UAV has an airframe which is substantially neutrally stable and comprises a fuselage and at least three wings which include control surfaces, wherein the wings are arranged in symmetrical relation about the fuselage and confer the UAV with a roll stability about the longitudinal axis of the fuselage for any roll angle, thereby allowing the roll angle of the UAV to be set to any required angle independent of the heading and pitch angle of the UAV, and comprising a flight control system for controlling the in-flight operation of the UAV, wherein the flight control system includes flight control sensors and a proximity sensor for sensing proximity of physical structures, through or around which the UAV is to be navigated; and automatically navigating the UAV utilizing control inputs from the flight control sensors and the proximity sensor, preferably at a fixed height, and rendering the UAV gust insensitive in response to inputs from the flight control sensors, whereby the UAV exhibits substantially only linear displacements in response to wind gusts.

Preferred embodiments of the present invention will now be described hereinbelow by way of example only with reference to the accompanying drawings, in which:
Figure 1 illustrates an unmanned air vehicle (UAV) control system in accordance with a first embodiment of the present invention;
Figure 2 schematically represents the UAV and the ground station of the UAV control system of Figure 1;
Figures 3(a) to (d) illustrate front perspective, side, plan and front views of a UAV in accordance with a preferred embodiment of the present invention;
Figures 4(a) and (b) illustrate the position determining technology employed by the UAV control system of Figure 1, where (a) the UAV is on a track approaching an object O, and (b) the UAV is moving radially with respect to the object O;
Figure 5 schematically represents the UAV and the ground station of a UAV control system as a modification of the UAV control system of Figure 1;
Figures 6(a) to (d) illustrate front perspective, side, plan and front views of a UAV in accordance with a second embodiment of the present invention; and
Figure 7 illustrates an unmanned air vehicle (UAV) control system in accordance with a second embodiment of the present invention.

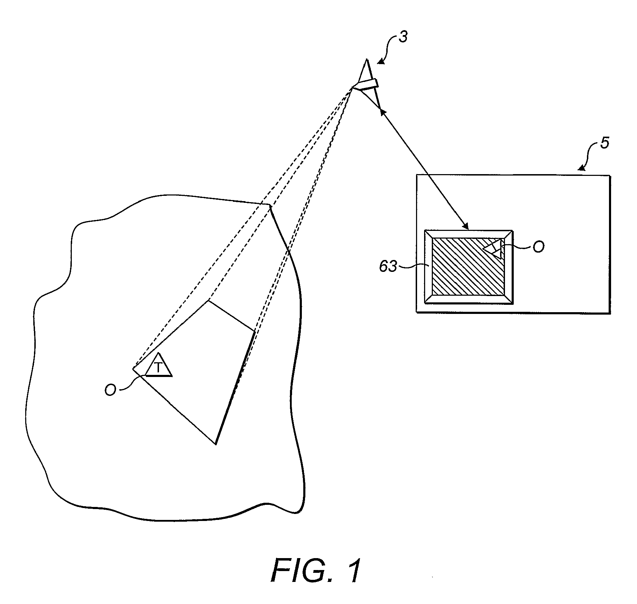

Figures 1 to 4 illustrate an unmanned air vehicle (UAV) control system in accordance with a first embodiment of the present invention.

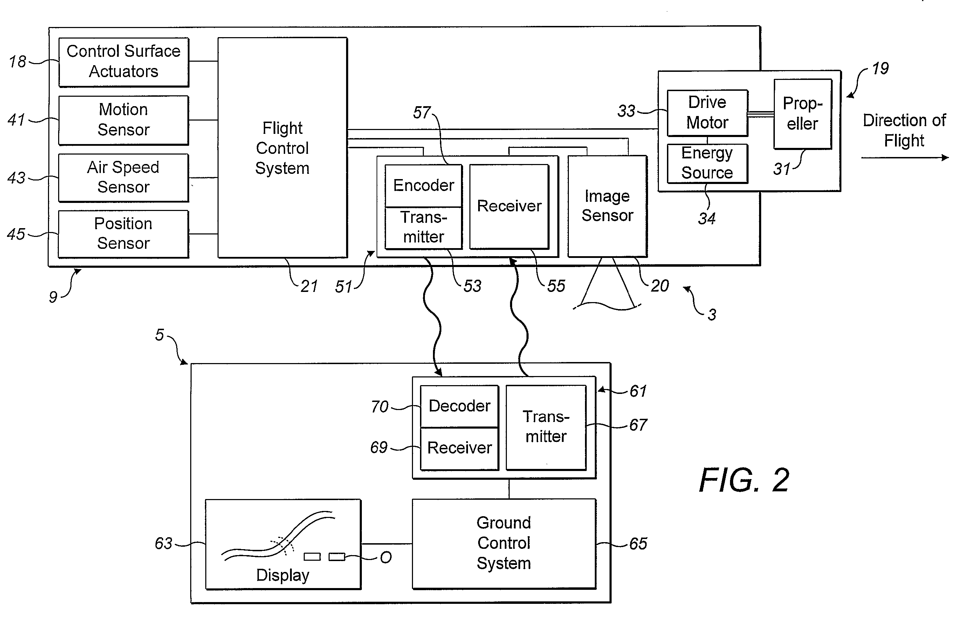

As illustrated in Figures 1 and 2, the unmanned air vehicle (UAV) control system comprises an unmanned air vehicle (UAV) 3 and a ground station 5 for controlling operation of the UAV 3, retrieving/visualising object data and providing data to a user for sense-and-avoid functionality, as will be described in more detail below.

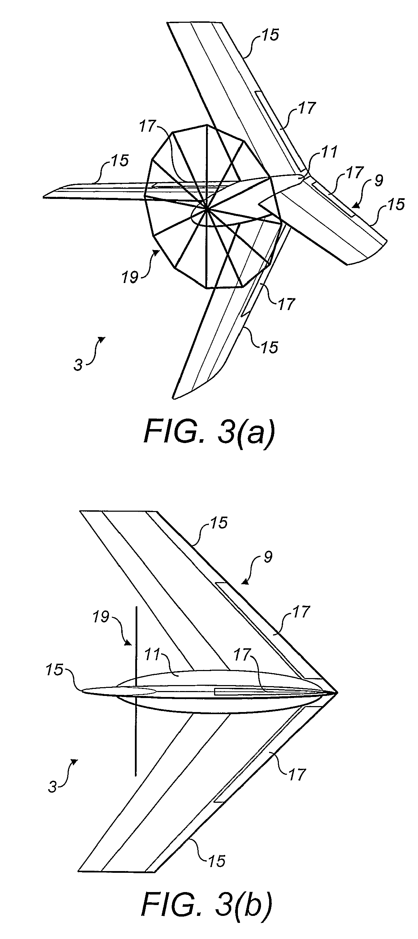

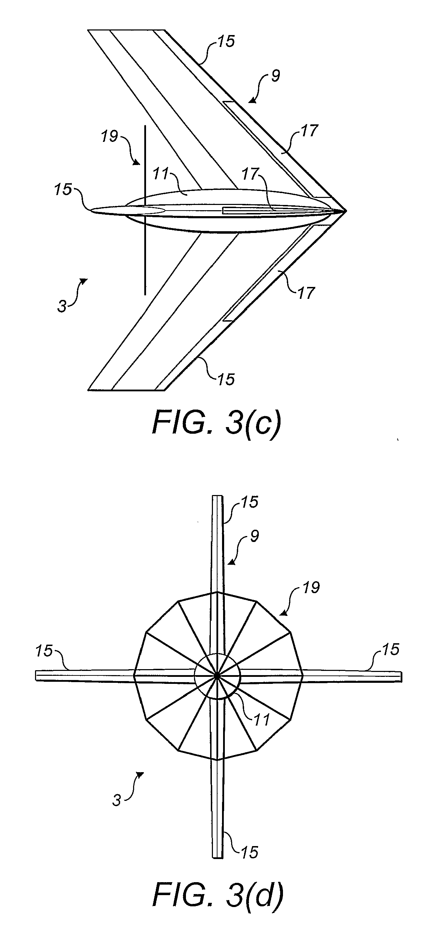

Figures 3(a) to (d) illustrate a UAV 3 in accordance with a first embodiment of the present invention.

The UAV 3 comprises an airframe 9, which comprises a fuselage 11 and wings 15 which extend from the fuselage 11 and include control surfaces 17 and associated control surface actuators 18 for operating the same, a propulsion device 19 for propelling the UAV 3 in flight, an image sensor 20 for imaging ground-based objects O, and a flight control system 21 for controlling the in-flight operation of the UAV 3.

In this embodiment the airframe 9 is neutrally stable, that is, has no natural stability or is unstable, and the flight control system 21 is configured to render the UAV 3 gust insensitive, whereby the UAV 3 exhibits substantially only linear translational (longitudinal, lateral and vertical) displacements and little or no rotational (yaw, pitch and roll) displacements as wind gusts are encountered.

Neutrally stability is achieved by arranging the center of gravity of the UAV 3 and the positions of the wings 15 such that wind gusts do not induce moments about any axis of the UAV 3. The absence of gust-induced moments removes any tendency to develop angular displacements when wind gusts are encountered.

By virtue of the UAV 3 being gust insensitive, and providing only for linear displacements of the UAV 3, the image sensor 20 can have a fixed position to the airframe 9, avoiding the need for a complex gimbal system, as linear displacements disrupt the image from the image sensor 20 to a much smaller extent than angular displacements, allowing a simple, fixed sensor arrangement to produce a usable image.

In this embodiment the fuselage 11 comprises an elongate structure.

In this embodiment the airframe 9 comprises at least three, here four wings which are arranged in symmetrical relation about the fuselage 11, here in cross (X) formation.

In this embodiment the wings 15 are forwardly swept in the direction of flight. In an alternative embodiment the wings 15 could be rearwardly swept in the direction of flight.

This symmetrical configuration of the wings 15 confers the UAV 3 with roll stability about the longitudinal axis of the fuselage 11, which, through operation of the control surfaces 17, allows for the roll angle of the UAV 3 to be set to any angle as required. As will be discussed in more detail hereinbelow, the ability to control the roll angle of the UAV 3, in combination with the gust insensitivity of the UAV 3, enables the image sensor 20 to have a fixed position.

In an alternative embodiment the airframe 9 could further comprise a tail section.

In this embodiment the propulsion device 19 is operative to generate a propulsion air flow, here a high-speed air flow, which acts to propel the UAV 3 in flight.

In this embodiment the propulsion device 19 is located forwardly of the wings 15 in the direction of flight, such that the propulsion air flow is directed over the control surfaces 17 of the wings 15, enabling a fast control response even when the UAV 3 does not have a high velocity, in particular during a vertical take-off.

In an alternative embodiment the propulsion device 19 could be located rearwardly of the wings 15 in the direction of flight.

In this embodiment the propulsion device 19 comprises a propeller 31 and a drive motor 33, powered by an energy source 34, here battery cells.

In an alternative embodiment the propulsion device 19 could comprise a jet, powered by a fuel source, and in a preferred embodiment the jet propulsion device 19 includes lateral jet ducts which are selectively operable to control stability of the UAV 3, particularly when operating at low speeds.

In this embodiment the UAV 3 includes an image sensor 20, here a video image sensor, which is capable of imaging a footprint on the ground, and in particular an object O on the ground.

In this embodiment the UAV 3 includes a single image sensor 20, which has a fixed position in relation to the airframe 9.

In this embodiment the image sensor 20 faces radially outwardly, such that the position of the sensor footprint can be adjusted by controlling the pitch, roll and heading of the UAV 3, where the roll angle can be set to have any required angle, independent of the pitch and heading of the UAV 3.

In one embodiment the image sensor 20 could include a plurality of sensor elements arranged fore-to-aft to allow for the simultaneous acquisition of images at different fore-aft elevations.

In an alternative embodiment the image sensor 20 could include a single sensor element and an actuator for altering the fore-aft elevation of the sensor element.

The flight control system 21 comprises a motion sensor 41, in this embodiment an inertial/motion sensor incorporating accelerometers and gyros, for providing orientation measurements, including pitch angle, roll angle and heading of the UAV 3, and inertial measurements, including acceleration and angular rate of the UAV 3.

The flight control system 21 further comprises an air speed sensor 43 for sensing the speed of the UAV 3.

The flight control system 21 further comprises a position sensor 45, in this embodiment a GPS receiver, for sensing the latitude, longitude and height of the UAV 3.

In operation, the flight control system 21, under the control of flight control software, senses the motion of the UAV 3 using the flight control sensors 41, 43, 45 and moves the control surfaces 17 using the control surface actuators 18 to maintain the UAV 3 on a desired trajectory. As the UAV 3 has a neutral trim state and no natural stability, which would tend to return an aircraft to its original flight speed and direction once perturbed by a wind gust, flight control requires the sensing of the motion of the UAV 3 to be very rapid and the movement of the control surfaces 17 to be both very rapid and accurate, in a manner which would be impossible for a human pilot to perform over any significant period of time. Whilst such flight control would be impossible for a human pilot, the present invention allows for such flight control, in that the sensing and the actuator response is performed under the control of the flight control system 21.

The present invention allows for a number of different flight modes, which include:

### (I) Orbit

In this mode, the control algorithm holds the UAV 3 in an orbit, typically an elliptical orbit, about the object O to steer the UAV 3 such that the object O is kept in view of the image sensor 20. The control algorithm calculates the pitch, roll and heading required to hold the required orbit and maintain the sensor footprint on the object O.

### (II) Waypoint

In this mode, the control algorithm navigates the UAV 3 around a set of waypoints to keep the object O in view of the image sensor 20 as much as possible. The control algorithm calculates the pitch, roll and heading required to maintain the sensor footprint on the object O in following the waypoint sequence.

### (III) Home to Object

In this mode, the control algorithm navigates the UAV 3 repeatedly to over-fly the object O and point the image sensor 20 to maintain the object O in the sensor footprint as much as possible. The control algorithm calculates the pitch, roll and heading required to maintain the sensor footprint on the object 0 in flying directly over the object O and the distance to fly away from the object O before initiating a turn-back to the object O.

### (IV) Footprint Steering

In this mode, the control algorithm navigates the UAV 3 to "fly" the sensor footprint along a given line of search, for example, in order to map a desired zone. The control algorithm navigates the UAV 3 such that the center of the sensor footprint travels along the required line of search regardless of the wind.

The UAV 3 further comprises a communications module 51 for communicating with the ground station 5.

In this embodiment the communications module 51 comprises a transmitter 53 for transmitting video signals and telemetry data to the ground station 5, and a receiver 55 for receiving control signals from the ground station 5.

In this embodiment, in transmitting telemetry information from the UAV 3 to the ground station 5, digital telemetry data is encoded into the blanking lines of a standard PAL video signal.

In this embodiment the transmitter 53 includes an encoder 57 which receives a video signal from the image sensor 20 and telemetry data from the flight control sensors 41, 43, 45, and encodes the telemetry data into the blanking lines of the video signal to provide a combined signal. As the digital telemetry data is superimposed on a section of video during the vertical blanking period, the telemetry data does not intrude on the visible picture.

In this embodiment the encoder 57 combines a standard 625 line System I video signal, with optional PAL color encoding, standard DRA bi-phase 4096 bits per second, 32 channel telemetry and 9600 baud serial data (GPS) onto a single video. signal.

In this embodiment the encoder 57 comprises an encoder card which generates the video timing signals and data stream, and a mixer unit which receives the video timing signals and data stream, converts the same into video levels and mixes the same into the video source.

The ground station 5 comprises a communications module 61 for communicating with the UAV 3, a display 63 for displaying the video image from the image sensor 20 on board the UAV 3, and a ground control system 65 for controlling operation of the UAV 3, driving the display 63 to display the video image from the image sensor 20 on board the UAV 3 and providing a user interface to enable identification of an object O in a displayed image.

In this embodiment the communications module 61 comprises a transmitter 67 for transmitting telemetry data to the UAV 3, and a receiver 69 for receiving video signals and telemetry data from the UAV 3.

In this embodiment the receiver 69 includes a decoder 70 which separates the telemetry data from the combined signal received from the UAV 3, and separately provides the telemetry data and a video signal, which can be displayed on a standard, unmodified video monitor.

In this embodiment the ground control system 65 includes a user interface, which allows a user to identify an object O in the image displayed on the display 63, and determine the position thereof, including the latitude, longitude and height.

In determining the position of the object O, the ground control system 65 utilizes object position determining technology, which represents an advanced form of triangulation, to determine the position of the object O, including height, without the use of digital terrain data. This technology allows the UAV 3 to be used in unmapped or poorly-mapped areas and is suitable for static or slow-moving ground-based objects O.

In calculating the actual position of the object O on the ground using the screen coordinates of the image of the object O on the display 63, the following information is required:
From telemetry:
   UAV 3 position, including:
      Latitude
      Longitude
      Height above a reference height RH
   UAV 3 orientation, including:
      Pitch angle
      Roll angle
      Heading
   Image sensor orientation (which may be constant) with respect to aircraft, including:
      Roll
      Elevation
      Azimuth
From the screen image:
   X and Y position of the object O

In this embodiment the object positioning determining technology employs repeated object position finding from different positions of the UAV 3, and determines the position of the object O relative to a reference height RH for the UAV 3 from the plurality of object fixes, which assumes that the object O has not moved between fixes.

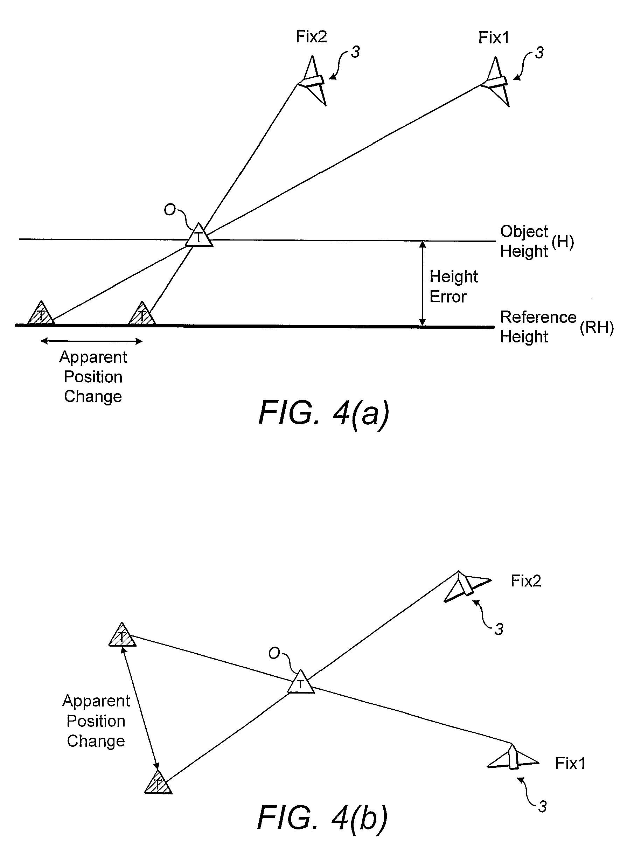

Figures 4(a) and (b) illustrate a circumstance where the UAV 3 is on a track approaching an object O which is at a height H above the reference height RH for the UAV 3, and the apparent position of the object O is determined from a plurality of object fixes Fix1, Fix2. Figure 4(a) illustrates an elevational view where the UAV 3 is approaching the object O, and Figure 4(b) illustrates a plan view where the UAV 3 is on a heading lateral to the object O.

At the first fix Fix 1, the system calculates an apparent position of the object O. In the case illustrated, this gives an object position too distant from the UAV 3. At the second fix Fix 2, the apparent position of the object O has changed, in this case moved towards the UAV 3 and on a different heading. The change in position is a function of the height error, allowing the height error to be calculated from the apparent change in position of the object O. From this height error, an accurate position, including height, of the object O is determined.

The use of this technique is combined with advanced trajectory shaping, which allows the operator to select an object O, using point and click in the image sensor view, at the ground station 5. Through the use of the described navigation algorithms, the vehicle trajectory and attitude are optimised in order to maintain the object O within the field of view of the image sensor 20, maximising "time on object". This facility has a major advantage in deskilling the operation of the UAV 3, providing carefree handling and allowing the operator to focus on the retrieval of data from the sensor payload, rather than direct control of the flight pattern of the UAV 3.

If digital terrain data is available, then, using an iterative method, it is possible to use an initial estimate of the height above the object O and determine a more accurate height above the object O and hence a more accurate position. This is similar to the operator identifying the position of the object O on a topographical map, estimating the height of the object O from the map data and inputting this information to the system.

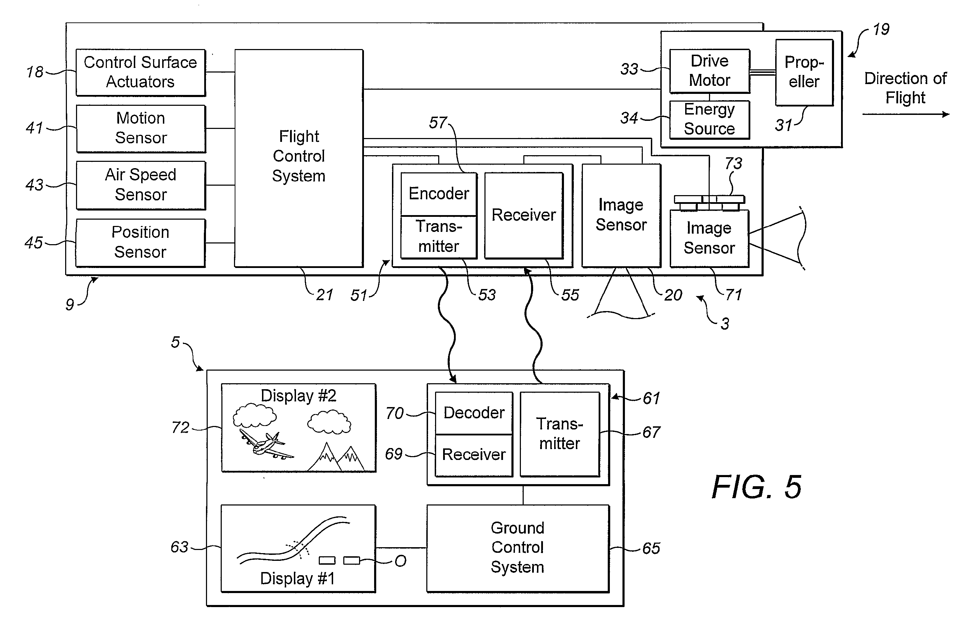

Figure 5 schematically represents the UAV 3 and the ground station 5 of a UAV control system as a modification of the UAV control system of the above-described embodiment.

The UAV control system of this embodiment differs in that the UAV 3 includes a second, forward-looking image sensor 71, here a video image sensor, which provides an operator with a visual image of the flying environment ahead of the UAV 3, and the ground station 5 includes a second display 72 for displaying the video image from the forward-looking image sensor 71, with the video signals from the forward-looking image sensor 71 being transmitted to the ground station 5 by the transmitter 53 of the communications module 51.

In this embodiment the forward-looking image sensor 71 is supported in a gimbal support 73, here a single-axis gimbal support, which enables, in the event that another air vehicle is identified ahead of the UAV 3 and evasive action is required, the forward-looking image sensor 71 to maintain the other air vehicle in view during the evasive action.

The maintenance of this visual contact using only a single-axis gimbal support 73 is possible by the ability to roll the UAV 3 to any attitude and still achieve lateral manoeuvring of the UAV 3; there being no skidding as the UAV 3 is able to generate a wing-borne force in any direction without rolling.

This concept utilises the ability to control the UAV 3 attitude in roll, pitch and yaw, whilst maintaining forward flight, to scan the sky and achieve a sense and avoid function similar to a human pilot, though the significant difference with a conventional air vehicle, which normally avoids an approaching air vehicle by banking to turn and compromises the visual on the approaching air vehicle, is that the visual on the approaching air vehicle is not compromised. In this instance, the pilot could be on the ground performing a remotely-piloted vehicle roll with conventional stick control, although there may be other options. However, instead of directly and consciously controlling the attitude or flightpath of the UAV 3, the pilot would be controlling the viewpoint of the returned image, in effect "flying the image sensor". This would allow the pilot to scan the sky ahead, to achieve the sensing role, by effectively yawing the aircraft and to a more limited degree, pitching the aircraft.

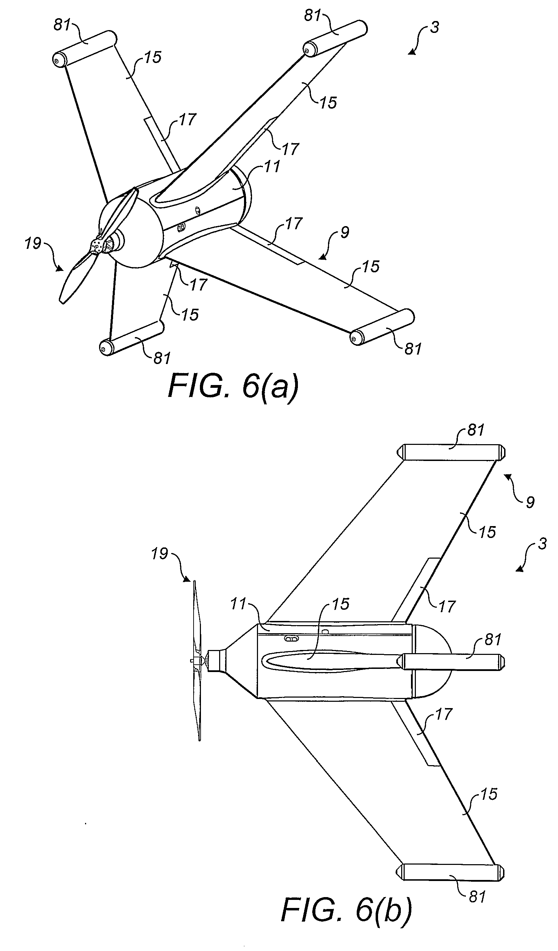

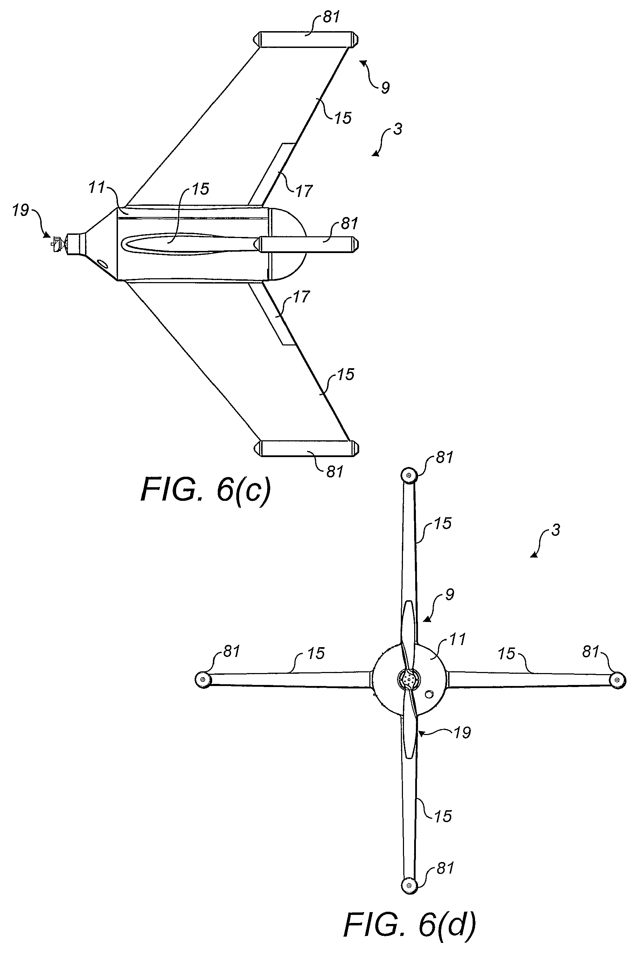

Figures 6(a) to (d) illustrate a UAV 3 in accordance with a second embodiment of the present invention.

The UAV 3 of this embodiment is quite similar to the UAV 3 of the first-described embodiment, and thus, in order to avoid unnecessary duplication of description, only the differences will be described in detail, with like parts being designated by like reference signs.

The UAV 3 of this embodiment differs from that of the first-described embodiment in that the wings 15 are rearwardly swept in the direction of flight, and in comprising strengtheners 81 at the tips of the wings 15, which allow the UAV 3 to rest directly on the ground.

In an alternative embodiment the wings 15 could be forwardly swept.

In this embodiment, similarly to the first-described embodiment, the propulsion device 19 is located forwardly of the wings 15 in the direction of flight, such that the propulsion air flow is directed over the control surfaces 17 of the wings 15, enabling a fast control response even when the UAV 3 does not have a high velocity, in particular during a vertical take-off.

In an alternative embodiment the propulsion device 19 could be located rearwardly of the wings 15 in the direction of flight.

In this embodiment, similarly to the first-described embodiment, the propulsion device 19 comprises a propeller 31 and a drive motor 33, powered by an energy source 34, here battery cells.

In an alternative embodiment the propulsion device 19 could comprise a jet, powered by a fuel source, and in a preferred embodiment the jet propulsion device 19 includes lateral jet ducts which are selectively operable to control stability of the UAV 3, particularly when operating at low speeds.

In an alternative embodiment, similarly to the first-described embodiment, the airframe 9 could further comprise a tail section.

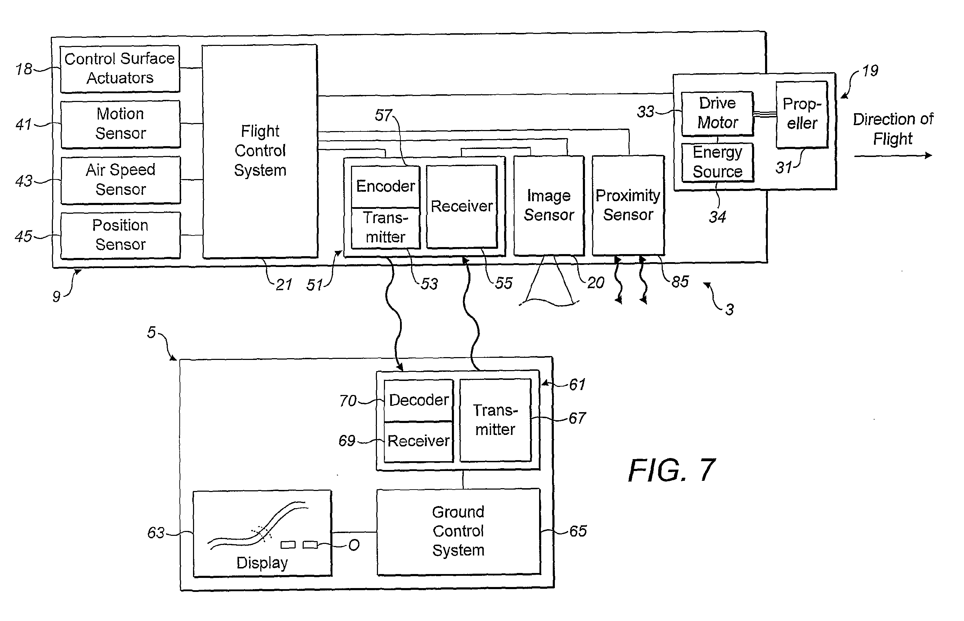

Figure 7 illustrates an unmanned air vehicle (UAV) control system in accordance with a second embodiment of the present invention.

The UAV control system of this embodiment is a modification of the first-described UAV control system, and thus, in order to avoid unnecessary duplication of description, only the differences will be described in detail, with like parts being designated by like reference signs.

In this embodiment the UAV 3 includes a proximity sensor 85 for sensing the proximity of physical structures, here fixed physical structures, which can be closely confined, such as presented by narrow tracks, through which the UAV 3 has to be navigated, or arrays of obstructions, around which the UAV 3 has to be navigated, and the flight control system 21 is operative automatically to navigate the UAV 3 utilizing the input from the proximity sensor 85, in a preferred embodiment at a fixed height.

In this embodiment the proximity sensor 85 comprises one or more sensor units, here utilizing electromagnetic radiation. In this embodiment the proximity sensor 85 comprises one or more radar sensor units, but alternatively or additionally could comprise one or more infra-red sensor units, one or more laser sensor units or one or more acoustic sensor units.

The present inventor has recognized that the UAV 3 allows for use in particularly confined environments, which would not be possible using conventional aircraft, manned or unmanned, through utilisation of the proximity sensor 85 to provide navigational control inputs. The UAV 3 has the ability to turn in any direction, independent of roll angle, unlike conventional aircraft which have to roll to turn, and thus the UAV 3 is able to respond instantly to navigational control inputs, providing an extremely agile vehicle, and, by utilising the proximity sensor 85 to provide navigational control inputs, the UAV 3 is able to navigate in particularly confined environments, which would otherwise not be possible. This navigational control is enhanced by operating the UAV 3 in a gust-insensitive mode, as confined environments are particularly sensitive to gusts.

Finally, it will be understood that the present invention has been described in its preferred embodiments and can be modified in many different ways without departing from the scope of the invention as defined by the appended claims.

## Claims

1. A gust-insensitive unmanned air vehicle (UAV) for imaging the ground, the UAV comprising:
an airframe (9) which is substantially neutrally stable and comprises a fuselage (11) and at least three wings (15) which include control surfaces (17), wherein the wings (15) are arranged in symmetrical relation about the fuselage (11) and confer the UAV with a roll stability about the longitudinal axis of the fuselage (11) for any roll angle, thereby allowing the roll angle of the UAV to be set to any required angle independent of the heading and pitch angle of the UAV;
a propulsion device (19) for propelling the UAV in flight;
an image sensor (20) for imaging the ground, wherein the image sensor (20) has a footprint, the position of which is determined by the roll angle of the UAV; and
a flight control system (21) for controlling the in-flight operation of the UAV, wherein the flight control system (21) includes flight control sensors (41, 43, 45) and is operative to render the UAV gust insensitive in response to inputs from the flight control sensors (41, 43, 45), whereby the UAV exhibits substantially only linear displacements in response to wind gusts, and control the roll angle of the UAV to determine the position of the sensor footprint.

2. The UAV of claim 1, wherein the airframe (9) comprises four wings (15) which are arranged in cross (X) formation, optionally the wings (15) are forwardly swept in the direction of flight of the UAV,

3. The UAV of claim 1 or 2, wherein the propulsion device (19) is operative to generate a propulsion air flow, which acts to propel the UAV in flight.

4. The UAV of claim 3, wherein the propulsion device (19) is located forwardly of at least part of the wings (15) in the direction of flight of the UAV, such that the propulsion air flow is directed over the control surfaces (17) of the wings (15), optionally the propulsion device (19) comprises a propeller (31) and a drive motor (33) which drives the propeller (31), or a jet.

5. The UAV of any of claims 1 to 4, wherein the image sensor (20) has a fixed position in relation to the airframe (9), optionally the image sensor (20) includes a single sensor element or a plurality of sensor elements.

6. The UAV of any of claims 1 to 4, wherein the image sensor (20) is movable only in a single axis in relation to the airframe (9).

7. The UAV of any of claims 1 to 6, wherein the flight control system (21) comprises a motion sensor (41) for sensing motion of the UAV, preferably the motion sensor (41) provides orientation measurements, including pitch angle, roll angle and heading of the UAV, and inertial measurements, including acceleration and angular rate of the UAV, an air speed sensor (43) for sensing the speed of the UAV, and/or a position sensor (45) for sensing the latitude, longitude and height of the UAV, preferably the position sensor (45) comprises a GPS receiver.

8. The UAV of any of claims 1 to 7, wherein the flight control system comprises a proximity sensor (85) for sensing proximity of physical structures, through or around which the UAV is to be navigated, and the flight control system (21) is operative automatically to navigate the UAV utilizing control inputs from the proximity sensor, preferably at a fixed height, optionally the proximity sensor comprises one or more sensor units, optionally the proximity sensor comprises one or more radar sensor units, one or more infra-red sensor units, one or more laser sensor units and/or one or more acoustic sensor units.

9. An unmanned air vehicle (UAV) control system for imaging the ground, the UAV control system comprising:
the UAV (3) of any of claims 1 to 8, further comprising:
a communications module (51) for communicating with a ground station (5); and
a ground station (5) for controlling operation of the UAV (3), wherein the ground station (5) comprises:
a communications module (61) for communicating with the UAV (3); and
a ground control system (65) for controlling operation of the UAV (3).

10. The UAV control system of claim 9, wherein the communications module (51) of the UAV (3) comprises a transmitter (53) for transmitting video signals and telemetry data to the ground station (5) and a receiver (55) for receiving telemetry data from the ground station (5), and the communications module (61) of the ground station (5) comprises a transmitter (67) for transmitting telemetry data to the UAV (3) and a receiver (69) for receiving video signals and telemetry data from the UAV (3), optionally the transmitter (53) of the communications module (51) of the UAV (3) includes an encoder (57) which receives a video signal from the image sensor (20) and telemetry data from the flight control sensors (41, 43, 45), and encodes the telemetry data into blanking lines of the video signal to provide a combined signal, and the receiver (69) of the communications module (61) of the ground station (5) includes a decoder (70) which separates the telemetry data from the combined signal, and separately provides the telemetry data and a video signal, optionally the encoder (51) comprises an encoder card which generates video timing signals and a data stream, and a mixer unit which receives the video timing signals and data stream, converts the same into video levels and mixes the same into the combined signal.

11. The UAV control system of claim 9 or 10, wherein the UAV (3) is operable in a plurality of different flight modes, optionally the UAV (3) is operable in an orbit mode, in which the UAV, (3) is held in an orbit, preferably an elliptical orbit, about an object (0) on the ground, such that the sensor footprint is maintained over the object (0), optionally the UAV (3) is operable in a waypoint mode, in which the UAV (3) is navigated around a set of waypoints, such that the sensor footprint is maintained on an object (0), optionally the UAV (3) is operable in an over-fly mode, in which the UAV (3) is repeatedly navigated to over-fly an object (0), such that the sensor footprint is, where possible, maintained on the object (0), optionally the UAV (3) is operable in a search mode, in which the UAV (3) is navigated to maintain the sensor footprint along a given line of search.

12. The UAV control system of any of claims 9 to 11, wherein the ground control system (65) includes a user interface, which allows a user to identify an object (0) in the image displayed on a display (63), and determine the position thereof, including the latitude, longitude and height, optionally the ground control system (65) is operative to determine the position, including height, of the identified object (0), without the use of digital terrain data, optionally the ground control system (65), in determining the position of the identified object (0), fixes the position of the identified object (0) from a plurality of different positions of the UAV (3) based on a reference height (RH), and determines the position of the identified object (0) relative to the reference height (RH) for the UAV (3) from the plurality of object fixes (Fix1, Fix2), optionally the ground control system (65) determines the position of the identified object (0) from the intersection of imaginary lines, for each object fix (Fix1, Fix2), from the UAV (3) to the object (0).

13. The UAV control system of any of claims 9 to 12, wherein the UAV (3) further comprises:
a second, forward-looking image sensor (71) for imaging air space ahead of the UAV (3) in flight, optionally the second image sensor (71) is movable in only a single axis, optionally the ground control system (65) is operable, through control of the roll angle of the UAV (3) and movement of the second image sensor (71), to scan the air space ahead of the UAV (3).

14. A method of operating an unmanned air vehicle (UAV), the method comprising the steps of:
providing an unmanned air vehicle (UAV), wherein the UAV has an airframe (9) which is substantially neutrally stable and comprises a fuselage (11) and at least three wings (15) which include control surfaces (17), wherein the wings (15) are arranged in symmetrical relation about the fuselage (11) and confer the UAV with a roll stability about the longitudinal axis of the fuselage (11) for any roll angle, thereby allowing the roll angle of the UAV to be set to any required angle independent of the heading and pitch angle of the UAV, and comprising a flight control system (21) for controlling the in-flight operation of the UAV, wherein the flight control system (21) includes flight control sensors (41, 43, 45) and a proximity sensor (85) for sensing proximity of physical structures, through or around which the UAV is to be navigated; and
automatically navigating the UAV utilizing control inputs from the flight control sensors (41, 43, 45) and the proximity sensor (85), preferably at a fixed height, and rendering the UAV gust insensitive in response to inputs from the flight control sensors (41, 43, 45), whereby the UAV exhibits substantially only linear displacements in response to wind gusts.

15. The method of claim 14, wherein the airframe (9) comprises four wings (15) which are arranged in cross (X) formation, optionally the wings (15) are forwardly swept in the direction of flight of the UAV

## Patentansprüche

1. Wind-Böen unempfindliches unbemanntes Luftfahrzeug (UAV) zur Aufnahme von Bildern des Bodens, welches umfasst:
einen Flugzcugzelle (9), dic im Wesentlichen neutral stabil ist und einen Flugzeugrumpf (11) umfasst und mindestens drei Flügel (15), die Steueroberflächen (17) aufweisen, worin die Flügel (15) symmetrisch um den Flugzeugrumpf (11) angeordnet sind und dem UAV eine Rollstabilität um die Längsachse des Flugzeugrumpfs (11) um jeden Rollwinkel verleihen, wodurch ermöglicht wird, dass der Rollwinkel des UAV unabhängig von der Richtung und dem Anstellwinkel des UAV auf jeden erforderlichen Winkel eingestellt werden kann;
eine Vortrieb-Einrichtung (19), um das UAV während des Fluges anzutreiben;
einen Bild-Sensor (20) zur Aufnahme eines Bildes des Bodens, worin der Bild-Sensor (20) ein Abdeckgebiet aufweist, das von dem Rollwinkel des UAV bestimmt wird; und
ein Flug-Steuersystem (21) zur Steuerung des Flugbetriebs des UAV, worin das Flug-Steuer-System (21) Flug-Steuer-Sensoren (41, 43, 45) aufweist und betrieben werden kann, um das UAV als Antwort auf Eingaben der Flug-Steuer-Sensoren (41,43,45)gegenüber Böen unempfindlich zu machen, wobei das UAV als Antwort auf Windböen im Wesentlichen nur lineare Versetzungen erfährt, und den Rollwinkel des UAV steuert, um die Position des Sensor-Abdeckgebiets zu bestimmen.

2. UAV nach Anspruch 1, worin die Flugzeugzelle (9) vier Flügel (15) umfasst, die in einer Kreuz (X)-Formation angeordnet sind, worin die Flügel (15) wahlweise in Flugrichtung des UAV nach vorne ausgerichtet sind.

3. UAV nach Anspruch 1 oder 2, worin die Vortrieb-Einrichtung (19) betrieben wird, um einen Vortriebs-Luftstrom zu erzeugen, der das UAV beim Flug antreibt.

4. UAV nach Anspruch 3, worin die Vortriebs-Einrichtung (19) vor mindestens einem Teil des Flügels (15) in Flugrichtung des UAV angeordnet ist, so dass der Vortriebs-Luftstrom über die Steuer-Oberflächen (17) der Flügel (15) geleitet werden, wahlweise worin die Vortriebs-Einrichtung (19) einen Propeller (31) und einen AntriebsMotor umfasst, der den Porpeller (31) antreibt, oder eine Düse.

5. UAV nach einem der Ansprüche 1 bis 4, worin der Bild-Sensor (20) eine feste Position in Bezug auf die Flugzeugzelle (9) aufweist, wahlweise worin der Bild-Sensor (20) ein einziges Sensorelement oder mehrere Sensorelemente umfasst.

6. UAV nach einem der Ansprüche 1 bis 4 , worin der Bild-Sensor (20) in Bezug auf die Flugzeugzelle (9) nur in einer einzigen Achse bewegbar ist.

7. UAV nach einem der Ansprüche 1 bis 6, worin das Flugsteuersystem (21) einen Bewegungssensor (41) umfasst, um die Bewegung des UAV zu erfassen, worin der Bewegungssensor (41) vorzugsweise Orientierungsmessungen liefert, einschließlich den Anstellwinkel, den Röllwinkel und der Richtung des UAV, und Trägheilsmessungen, einschließlich Beschleunigung und Winkelgeschwindigkeit des UAV, und einen Luftgeschwindigkeitssensor (43) umfasst, zur Erfassung der Geschwindigkeit des UAV und/oder einen Positionssensor (45), zur Erfassung der Breite, Länge und Höhe des UAV, worin der Positionssensor (45) vorzugsweise einen GPS-Empfänger umfasst.

8. UAV nach einem der Ansprüche 1 bis 7, worin das Flugsteuersystem einen Annäherungssensor (86) umfasst, um die Nähe körperlicherStrukturen zu erfassen, durch die oder um die das UAV gesteuert werden soll, und worin das Flugsteuersystem (21) betrieben wird, um das UAV unter Verwendung von Steuereingaben des Annäherungssensors automatisch zu navigieren, vorzugsweise in einer bestimmten Höhe, wahlweise worin der Annäherungssensor ein oder mehrere Sensoreinheiten umfasst,wahlweise worin der Annäherungssensor ein oder mehrere Radarsensoreinheiten umfasst, ein oder mehrere Infrarotsensoreinheiten, ein oder mehrere Lasersensoreinheiten und/oder ein oder mehrere akustische Sensoreinheiten.

9. Steuersystem für ein unbemanntes Luftfahrzeug (UAV) zur Aufnahme von Bildern des Bodens, welches umfasst:
das UAV nach einem der Ansprüche 1 bis 8, weiter umfassend:
ein Kommunikationsmodul (51) zur Kommunikation mit einer Bodenstation (5), und
eine Bodenstation (5) zur Steuerung des Betriebs des UAV (3), worin die Bodenstation umfasst:
ein Kommunikationsmodul (61) zur Kommunikation mit dem UAV (3), und
ein Boden-Steuersystem (65) zu Steuerung des Betriebs des UAV (3).

10. UAV-Steuersystem nach Anspruch 9, worin das Kommunikationsmodul (51) des UAV (3) einen Transmitter (53) umfasst, um Videosignale und Telemetriedaten zu der Bodenstation (5) zu übertragen, und einen Empfänger (55), um Telemetriedaten von der Bodenstation (5) zu empfangen, und worin das Kommunikationsmodul (61) der Bodenstation (5) einen Transmitter (67 umfasst, um Telemetriedaten zu dem UAV (3) zu übermitteln, und einen Empfänger (69), um Videosignale und Telemetriedaten von dem UAV (3) zu empfangen, wahlweise worin der Transmitter (53) des Kommunikalions-moduls (51) des UAV (3) eine Codiereinrichtung (57) umfasst, die von dem Bildsensor (20) ein Videosignal und von den Flugsteuerungssensoren (41, 43, 45) Telemetriedatenempfängt, und die Telemetriedaten zu Zeilenaustastungen des Videosignals codiert, um ein kombiniertes Signal zu liefern, und worin der Empfänger (69) des Kommunikationsmoduls (61) der Bodenstation (5) eine Decodierungseinrichtung (70) umfasst, die die Telemetriedaten von dem kombinierten Signal trennt, und die Telemetriedaten und ein Videosignal separat liefert, wahlweise worin die Codierungseinrichtung (51) umfasst, eine Codierungskarte, die Videozeitsignale und einen Datenstrom erzeugt, und eine Mischeinheit, die die Videozeitsignale und den Datenstrom empfängt, diesen in Videopegel umwandelt und diese in das kombinierte Signal inischt.

11. UAV-Steuersystem nach Anspruch 9 oder 10, worin das UAV (3) in mehreren verschiedenen Flugmodi betrieben werden kann, wahlweise, worin das UAV (3) in einem Orbitmodus betrieben werden kann, bei dem das UAV (3) in einem Orbit gehalten wird, vorzugsweise einem elliptischen Orbit um ein Objekt (0) am Boden, so dass der Sensor-Ausdeckbereich über den Objekt (0) gehalten wird, wahlweise worin der UAV (3) in einem Wegpunkt-Modus betrieben werden kann, bei dem das UAV (3) um einen Satz von Wegpunkten navigiert wird, so dass der Sensor-Abdeckbereich auf einem Objekt (0) gehalten wird, wahlweise worin dasUAV (3) in einem Überflugmodus betrieben werden kann, bei dem dasUAV (3) wiederholt navigiert wird, über ein Objekt (0) zu fliegen, so dass der Sensor-Abdeckbereich, wo möglich, auf dem Objekt (0) gehalten wird, wahlweise worin dasUAV (3) in einem Suchmodus betrieben werden kann, bei dem dasUAV (3) navigiert wird, um denSensor-Abdeckbereich entlang einer bestimmten Suchlinie zu halten.

12. UAV-Steuersystem nach einem der Ansprüche 9 bis 11, worin das Bodensteuer-system (65) ein Nutzer-Interface umfasst, das einem Nutzer ermöglicht, ein Objekt (0) in dem im Display (63) angezeigten Bild zu identifizieren und dessen Position zu bestimmen, einschließlich der Breite, der Länge und der Höhe, wahlweise worin das Boden-steuersystem (65) betrieben wird, die Position, einschließlich der Höhe, des identifizierten Objekts (0) ohne Verwendung von digitalen Bodendaten zu bestimmen, wahlweise worin das Bodensteuersystem (65) bei der Bestimmung der Position des identifizierten Objekts (0), die Position des identifizierten Objekts (0) von mehreren unterschiedlichen Positionen des UAV (3) basierend auf einer Referenz-Höhe (RH) festlegt, und die Position des identifizierten Objekts (0) relativ zu der Referenzhöhe (RH) für dasUAV (3) aus den mehreren Objektfestlegungen (Fix1, Fix2) bestimmt, wahlweise worin das Bodensteuersystem (65) die Position des identifizierten Objekts (0) aus dem Schnittpunkt imaginärer Linien für jede Objektfestlegung (Fix1, Fix2) von dem UAV (3) zu dem Objekt (0) bestimmt.

13. UAV-Steuersystem nach einem der Ansprüche 9 bis 12, worin der UAV (3) weiter umfasst:
einen zweiten, nach vorne ausgerichteten Bildsensor (71), um den Luftraum vor dem UAV (3) beim Flug aufzunehmen, wahlweise worin der zweite Bildsensor (71) in nur einer einzigen Achse bewegt werden kann, wahlweise worin das Bodensteuersystem (65) durch Steuerung des Rollwinkels des UAV (3) und Bewegung des zweiten Bildsensors (71) betrieben werden kann, um den Luftraum vor dem UAV (3) abzutasten.

14. Verfahren zum Betreiben eines unbemannten Luftfahrzeugs (UAV), worin das Verfahren die Schritte umfasst,
Bereitstellen eines unbemannten Luftfahrzeugs (UAV), worin das UAV eine Flugzeugzelle (9)umfasst, die im Wesentlichen neutral stabil ist und einen Flugzeugrumpf (11) umfasst, und mindestens drei Flügel (15), die Steueroberflächen (17) aufweisen, worin die Flügel (15) symmetrisch Relation um den Flugzeugrumpf (11) angeordnet sind und dem UAV eine Rollstabilität um die Längsachse des Flugzeugrumpfs (11) um jeden Rollwinkel verleihen, wodurch ermöglicht wird, dass der Rollwinkel des UAV unabhängig von der Richtung und dem Anstellwinkel des UAV auf jeden erforderlichen Winkel eingestellt werden kann, und ein Flugsteuersystem (21) umfasst, zur Steuerung des Flugbetriebs des UAV, worin das Flugsteuersystem (21) Flug-Steuer-Sensoren (41, 43, 45) aufweist undeinen Annäherungssensor (85), um die Nähe körperlicher Strukturen zu erfassen, durch oder um die das UAV navigiert werden soll; und
automatisches Navigieren des UAV unter Verwendung von Steuereingaben von den Flugsteuersensoren (41, 43, 45) und dem Annäherungssensor (85), vorzugsweise bei einer bestimmten Höhe, wobei das UAV als Antwort der Eingaben von den Flugsteuersensoren (41, 43, 45) unempfindlich gegenüber Böen wird, wobei das UAV als Antwort auf Windböen im Wesentlichen nur lineare Versetzungen erfährt.

15. Verfahrennach Anspruch 14, wobei die Flugzelle (9) vier Flügel (15) umfasst, die in einer Kreuz-(X)-Form angeordnet sind, wahlweise worin die Flügel (15) nach vorne, in Flugrichtung des UAV ausgerichtet sind.

## Revendications

1. Véhicule aérien sans pilote (UAV) insensible aux rafales destiné à imager le sol, l'UAV comprenant :
une cellule (9) ayant une stabilité sensiblement neutre et comprenant un fuselage (11) et au moins trois ailes (15) qui comprennent des surfaces de commande (17), dans lequel les ailes (15) sont agencées dans une relation symétrique autour du fuselage (11) et confèrent à l'UAV une stabilité au roulis autour de l'axe longitudinal du fuselage (11) pour tout angle de roulis, permettant ainsi à l'angle de roulis de l'UAV d'être réglé à tout angle requis indépendamment du cap et de l'angle de tangage de l'UAV ;
un dispositif de propulsion (19) destiné à propulser l'UAV en vol ;
un capteur d'image (20) destiné à imager le sol, dans lequel le capteur d'image (20) a une zone de couverture, dont la position est déterminée par l'angle de roulis de l'UAV ; et
un système de commande de vol (21) destiné à commander le fonctionnement en vol de l'UAV, dans lequel le système de commande de vol (21) comprend des capteurs de commande de vol (4-, 43, 45) et est opérationnel pour rendre l'UAV insensible aux rafales en réponse à des entrées en provenance des capteurs de commande de vol (41, 43, 45), moyennant quoi l'UAV n'affiche sensiblement que des déplacements linéaires en réponse aux rafales de vent, et régule l'angle de roulis de l'UAV afin de déterminer la position de la zone de couverture de capteur.

2. UAV selon la revendication 1, dans lequel la cellule (9) comprend quatre ailes (15) qui sont agencées en une formation en croix (X), facultativement les ailes (15) sont en flèche négative dans la direction de vol de l'UAV.

3. UAV selon la revendication 1 ou 2, dans lequel le dispositif de propulsion (19) est opérationnel pour générer un flux d'air de propulsion, qui agit pour propulser l'UAV en vol.

4. UAV selon la revendication 3, dans lequel le dispositif de propulsion (19) est situé à l'avant par rapport à au moins une partie des ailes (15) dans la direction de vol de l'UAV, de sorte que le flux d'air de propulsion est dirigé sur les surfaces de commande (17) des ailes (15), facultativement le dispositif de propulsion (19) comprend une hélice (31) et un moteur d'entraînement (33) qui entraîne l'hélice (31) ou un jet.

5. UAV selon l'une quelconque des revendications 1 à 4, dans lequel le capteur d'image (20) a une position fixe par rapport à la cellule (9), facultativement le capteur d'image (20) comprend un seul élément de capteur ou une pluralité d'éléments de capteur.

6. UAV selon l'une quelconque des revendications 1 à 4, dans lequel le capteur d'image (20) est mobile uniquement selon un seul axe par rapport à la cellule (9).

7. UAV selon l'une quelconque des revendications 1 à 6, dans lequel le système de commande de vol (21) comprend un capteur de mouvement (41) destiné à détecter le mouvement de l'UAV, de préférence le capteur de mouvement (41) fournit des mesures d'orientation, comprenant l'angle de tangage, l'angle de roulis et le cap de l'UAV, et des mesures inertielles, comprenant l'accélération et la vitesse angulaire de l'UAV, un capteur de vitesse propre (43) destiné à détecter la vitesse de l'UAV, et/ou un capteur de position (45) destiné à détecter la latitude, la longitude et la hauteur de l'UAV, de préférence le capteur de position (45) comprend un récepteur GPS.

8. UAV selon l'une quelconque des revendications 1 à 7, dans lequel le système de commande de vol comprend un capteur de proximité (85) destiné à détecter la proximité de structures physiques, à travers ou autour desquelles l'UAV doit naviguer, et le système de commande de vol (21) est automatiquement opérationnel pour diriger l'UAV en utilisant des entrées de commande du capteur de proximité, de préférence à une hauteur fixe, facultativement le capteur de proximité comprend une ou plusieurs unités de capteur, facultativement le capteur de proximité comprend une ou plusieurs unités de capteur radar, une ou plusieurs unités de capteur infrarouge, une ou plusieurs unités de capteur laser et/ou une ou plusieurs unités de capteur acoustique.

9. Système de commande de véhicule aérien sans pilote (UAV) destiné à imager le sol, le système de commande d'UAV comprenant :
l'UAV (3) selon l'une quelconque des revendications 1 à 8, comprenant en outre :
un module de communication (51) destiné à communiquer avec une station au sol (5) ; et
une station au sol (5) destinée à commander le fonctionnement de l'UAV (3), dans lequel la station au sol (5) comprend :
un module de communication (61) destiné à communiquer avec l'UAV (3) ; et
un système de commande au sol (65) destiné à commander le fonctionnement de l'UAV (3).

10. Système de commande d'UAV selon la revendication 9, dans lequel le module de communication (51) de l'UAV (3) comprend un émetteur (53) destiné à transmettre des signaux vidéo et des données télémétriques à la station au sol (5) et un récepteur (55) destiné à redevoir des données télémétriques en provenance de la station au sol (5), et le module de communication (61) de la station au sol (5) comprend un émetteur (67) destiné à transmettre des données de télémétrie à l'UAV (3) et un récepteur (69) destiné à recevoir des signaux vidéo et des données télémétriques en provenance de l'UAV (3), facultativement l'émetteur (53) du module de communication (51) de l'UAV (3) comprend un encodeur (57) qui reçoit un signal vidéo en provenance du capteur d'image (20) et des données télémétriques en provenance des capteurs de commande de vol (41, 43, 45), et encode les données télémétriques dans des lignes de suppression du signal vidéo afin de fournir un signal combiné, et le récepteur (69) du module de communication (61) de la station au sol (5) comprend un décodeur (70) qui sépare les données télémétriques du signal combiné, et fournit séparément les données télémétriques et un signal vidéo, facultativement l'encodeur (51) comprend une carte d'encodeur qui génère des signaux de rythme vidéo et un flux de données, et une unité de mélangeur qui reçoit les signaux de rythme vidéo et un flux de données, convertit ce dernier en des niveaux vidéo et mélange ces derniers en le signal combiné.

11. Système de commande d'UAV selon la revendication 9 ou 10, dans lequel l'UAV (3) est opérationnel dans une pluralité de modes de vol différents, facultativement l'UAV (3) est opérationnel dans un mode orbite, dans lequel l'UAV (3) est maintenu en orbite, de préférence en orbite elliptique autour d'un objet (0) au sol, de sorte que la zone de couverture du capteur est maintenue au-dessus de l'objet (0), facultativement l'UAV (3) est opérationnel dans un mode de point de cheminement, dans lequel l'UAV (3) est dirigé autour d'un ensemble de points de cheminement, de sorte que la zone de couverture de capteur est maintenue sur un objet (0), facultativement l'UAV (3) est opérationnel dans un mode survol, dans lequel l'UAV (3) est dirigé de façon répétée afin de survoler un objet (0), de telle sorte que la zone de couverture du capteur est, lorsque c'est possible, maintenue sur l'objet (0), facultativement l'UAV (3) est opérationnel dans un mode recherche, dans lequel l'UAV (3) est dirigé de façon à maintenir la zone de couverture de capteur le long d'une ligne de recherche donnée.

12. Système de commande d'UAV selon l'une quelconque des revendications 9 à 11, dans lequel le système de commande au sol (65) comprend une interface utilisateur, qui permet à un utilisateur d'identifier un objet (0) dans l'image affichée sur un afficheur (63), et de déterminer sa position, dont la latitude, la longitude et la hauteur, facultativement le système de commande au sol (65) est opérationnel pour déterminer la position, dont la hauteur de l'objet identifié (0), sans utiliser de données terrain numériques, facultativement le système de commande au sol (65), lorsqu'il détermine la position de l'objet identifié (0), fixe la position de l'objet identifié (0) à partir d'une pluralité de différentes positions de l'UAV (3) en se basant sur une hauteur de référence (HR), et détermine la position de l'objet identifié (0) par rapport à la hauteur de référence (HR) pour l'UAV (3) à partir de la pluralité de points fixes d'objet (Fix1, Fix2), facultativement le système de commande au sol (65) détermine la position de l'objet identifié (0) à partir de l'intersection de lignes imaginaires, pour chaque point fixe d'objet (Fix1, Fix2), entre l'UAV (3) et l'objet (0).

13. Système de commande d'UAV selon l'une quelconque des revendications 9 à 12, dans lequel l'UAV (3) comprend en outre :
un second capteur d'image frontal (71) permettant d'imager un espace aérien devant l'UAV (3) en vol, facultativement le second capteur d'image (71) est mobile selon un seul axe, facultativement le système de commande au sol (65) est opérationnel, par l'intermédiaire d'une commande de l'angle de roulis de l'UAV (3) et le mouvement du second capteur d'image (71), pour scanner l'espace aérien devant l'UAV (3).

14. Procédé d'exploitation d'un véhicule aérien sans pilote (UAV), le procédé comprenant les étapes :
de fourniture d'un véhicule aérien sans pilote (UAV), dans lequel l'UAV a une cellule (9) qui a une stabilité sensiblement neutre et comprend un fuselage (11) et au moins trois ailes (15) qui comprennent des surfaces de commande (17), dans lequel les ailes (15) sont agencées dans une relation symétrique autour du fuselage (11) et confèrent à l'UAV une stabilité au roulis autour de l'axe longitudinal du fuselage (11) pour tout angle de roulis, permettant ainsi à l'angle de roulis de l'UAV d'être réglé à tout angle requis indépendamment du cap et de l'angle de tangage de l'UAV, et comprenant un système de commande de vol (21) destiné à commander le fonctionnement en vol de l'UAV, dans lequel le système de commande de vol (21) comprend des capteurs de commande de vol (41, 43, 45) et un capteur de proximité (85) destiné à détecter la proximité de structures physiques à travers ou autour desquelles l'UAV doit être dirigé ; et
de navigation automatique de l'UAV en utilisant des entrées de commande en provenance des capteurs de commande de vol (41, 43, 45) et du capteur de proximité (85), de préférence à une hauteur fixe, et le fait de rendre l'UAV insensible aux rafales en réponse à des entrées en provenance des capteurs de commande de vol (41, 43, 45), moyennant quoi l'UAV n'affiche sensiblement que des déplacements linéaires en réponse aux rafales de vent.

15. Procédé selon la revendication 14, dans lequel la cellule (9) comprend quatre ailes (15) qui sont agencées en une formation en croix (X), facultativement les ailes (15) sont en flèche négative dans la direction de vol de l'UAV.
